# EUROPEAN PATENT SPECIFICATION

(11) **EP 3 372 433 B1**
(45) Date of publication and mention of the grant of the patent: **05.05.2021**
(21) Application number: 18159365.8
(22) Date of filing: 01.03.2018
(51) Int. Cl.: B60K 13/04

(54) **STRUCTURE OF A VEHICLE WITH FUEL- AND PURIFYING EXHAUST GAS FLUID FILLER INLETS HAVING SEALING MEANS**
KRAFTFAHRZEUGSTRUKTUR MIT KRAFTSTOFF- UND ABGASREINIGUNGSFLÜSSIGKEITSEINLÄSSEN UND DICHTUNGSMITTELN
STRUCTURE DE VÉHICULE AVEC ENTRÉES À CARBURANT ET LIQUIDE DE PURIFICATION D'ÉCHAPPEMENT ET MOYENS D'ÉTANCHÉITÉ

(30) Priority: 03.03.2017 JP 2017040415
(43) Date of publication of application: 12.09.2018
(73) Proprietor: Mitsubishi Jidosha Kogyo Kabushiki Kaisha, Tokyo 108-8410 (JP); Mitsubishi Jidosha Engineering Kabushiki Kaisha, Aichi 444-8501 (JP)
(72) Inventor: Yamamoto, Masahiro, Tokyo, 108-8410 (JP); Sano, Takayuki, Tokyo, 108-8410 (JP); Inden, Kazuto, Okazaki-shi, Aichi, 444-8501 (JP)
(74) Representative: Vossius & Partner Patentanwälte Rechtsanwälte mbB

(56) References cited:
- EP-A1- 1 956 207
- WO-A1-2015/108720
- WO-A1-2016/091875
- WO-A1-2017/084915
- JP-A- 2015 063 240

## Description

### FIELD

The present invention relates to a structure of a vehicle body of a vehicle having a fuel filler inlet for a fuel and a solution filler inlet for an additive.

### BACKGROUND

In a conventional vehicle with an internal combustion engine, an exhaust gas purifying system that injects a reducing agent stored in a tank to exhaust gas in order to reduce and purify toxic components in the exhaust gas is sometimes employed. In a diesel engine, urea or ammonia is used as a reducing agent to reduce nitrogen oxides (NOx) in the exhaust gas; hence an additive such as a urea aqueous solution or an ammonia aqueous solution is stored in the tank.

The tank is proposed to be installed at a position under the floor of the vehicle, for example (e.g., Japanese Patent No. 4826612). This layout ensures the cabin space of the vehicle and avoids degrading of the comfortability of the cabin even when the additive leaks.

The vehicle of the above Patent Literature arranges a solution filler inlet for the additive on the floor of the vehicle cabin; hence refilling of the additive takes place in the cabin. However, baggage may be stacked in the cabin, and this may hinder the workability. In addition, considering the possibility of spilling the additive during refilling, a desirable system is such that it allows refilling of the additive from the outside of the cabin. For example, a conceivable system arranges a solution filler inlet near the fuel filler inlet of the vehicle and connects the solution filler inlet and the tank via a solution supply pipe.

Between a pipe member such as a fuel filler inlet and a solution filler inlet, a seal member (sealer) is interposed in order to ensure waterproofness. In order to ensure the waterproofness of multiple pipe members, respective positions of the pipe members need to be set such that the seal members do not interfere with each other. Thus, it is difficult to dispose the pipe members close to one another. This makes it difficult to downsize the installation space of the fuel filler inlet and the solution filler inlet.
EP1956207 A1 relates to a urea tank for a transport vehicle according the preamble of claim 1.

### SUMMARY

### TECHNICAL PROBLEMS

With the foregoing problems in view, one of the objects of the present disclosure is to provide a structure of a vehicle body that ensures the sealability of the fuel filler inlet and the solution filler inlet and that also easily reduces the installation space of the fuel filler inlet and the solution filler inlet.

### SOLUTION TO PROBLEMS

(1) Here, there is disclosed a structure of a vehicle body comprising:a fuel filler inlet for supplying a fuel to be provided to an engine mounted on a vehicle ;a solution filler inlet, being adjacent to the fuel filler inlet, for supplying an additive to purify an exhaust gas from the engine;a fixed member comprising a first hole that receives the fuel filler inlet and a second hole that receives the solution filler inlet, and being fixed to the vehicle body;a fuel filler boot having a first sealer that is disposed on one of a front side and a back side of the fixed member and seals a space between the fixed member and the fuel filler inlet; and an additive filler boot having a second sealer that is disposed on another one of the front side and the back side of the fixed member and seals a space between the fixed member and the solution filler inlet,the structure being characterized in that :the fuel filler boot and the additive filler boot are formed separately from each other; and at least a part of the first sealer and a part of the second sealer are arranged so as to overlap each other while sandwiching a portion of the fixed member.
(2) Preferably, the fuel filler inlet includes a fuel filler boot that projects towards an outside of the vehicle further than the first sealer.
(3) Further preferably, the first sealer is disposed on the back side of the fixed member and the second sealer is disposed on the front side of the fixed member.
   In other words, the first sealer and the second sealer are preferably disposed on an inner face and an outer face of the fixed member, respectively, with respect to the vehicle.
(4) Still further preferably, the solution filler inlet includes an additive filler boot that is depressed towards an inside of the vehicle further than the second sealer.
(5) Still further preferably, the structure further includes an additive cap covering an outer side of the solution filler inlet wherein the additive cap includes a screw groove being formed on an inner circumference thereof and the solution filler inlet includes a corresponding screw thread formed on an outer circumference thereof.
(6) Still further preferably, an end face of the fuel filler inlet is arranged on an outer side of the vehicle compared to an end face of the solution filler inlet.

### ADVANTAGEOUS EFFECTS

Arranging the first sealer on one of the front and the back sides of the fixed member while arranging the second sealer on the other one of the front and the back sides of the fixed member allows the first sealer and the second sealer to be closer to each other, while ensuring the sealability, so that the installation space of the fuel filler inlet and the solution filler inlet can be reduced.

### BRIEF DESCRIPTION OF DRAWINGS

The nature of this invention, as well as other objects and advantages thereof, will be explained in the following with reference to the accompanying drawings, in which like reference characters designate the same or similar parts throughout the figures and wherein:
FIG. 1 is a perspective view illustrating a vehicle adopting a structure of a vehicle body according to an embodiment;
FIG. 2 is a horizontal cross-sectional view illustrating a refilling inlet; and
FIG. 3 is a schematic front view illustrating a fixed member.

### DESCRIPTION OF EMBODIMENTS

Hereinafter, description will now be made in relation to a structure of a vehicle body of the present embodiment with reference to the accompanying drawings. The following embodiment is exemplary and does not intend to exclude various modification and application of technique not explicitly described in the following embodiment. The structures of the embodiment can be modified without departing from the scope of the embodiment, can be selected and omitted if required, and can be appropriately combined.

### 1. Structure

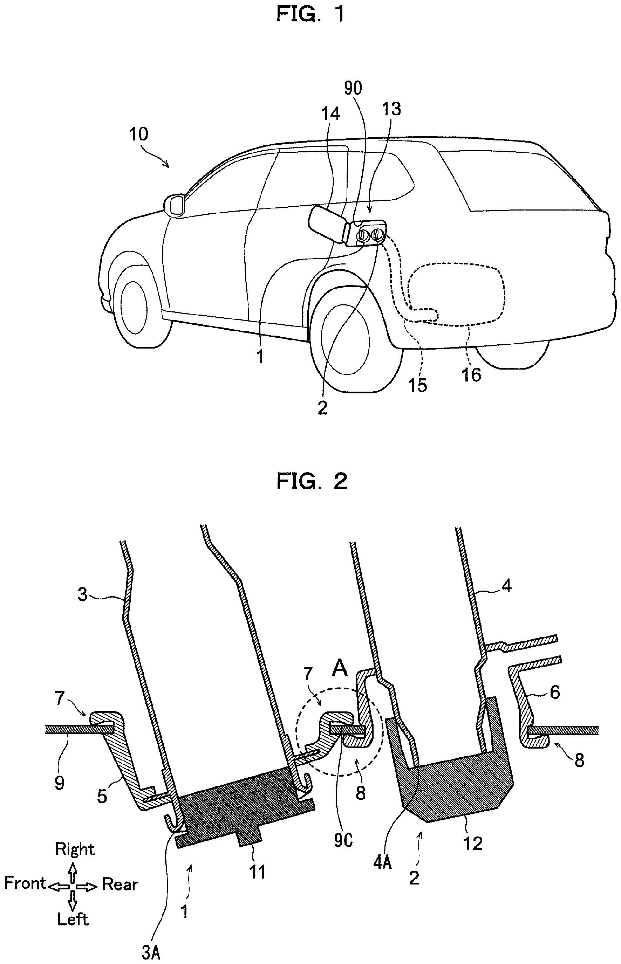

The structure of a vehicle body of the present embodiment is applied to a vehicle 10 illustrated in FIG. 1. The vehicle 10 is an automobile equipped with a diesel engine and a urea SCR (Selective Catalytic Reduction) system to reduce the NOx contained in the exhaust gas. Under the floor of the rear portion of the vehicle 10, a fuel tank (not illustrated) and a tank 16 for an additive are fixed to the vehicle body. The tank 16 is a container that stores an additive (e.g., urea aqueous solution or ammonia aqueous solution) used in the urea SCR system. On the side face of the vehicle 10, a fuel filler inlet 1 for refilling the fuel to be provided to the engine and a solution filler inlet 2 for refilling an additive to purify the exhaust gas from the engine are arranged adjacently to each other. In the present embodiment, the fuel filler inlet 1 and the solution filler inlet 2 are collectively referred to as a filler inlet 13.

The filler inlet 13 is incorporated in a casing 90 attached to the left rear fender of the vehicle 10 and are thereby fixed to the vehicle body. The casing 90 is formed into a box shape opened on the surface side of the vehicle 10, and the opened portion on the surface side can be closed by a lid 14. The lid 14 is usually locked and is unlocked and opened when the fuel or the additive is to be refilled. The fuel filler inlet 1 is positioned on the left (the front side of the vehicle 10) and the solution filler inlet 2 is positioned on the right (the rear side of the vehicle 10).

Between the fuel filler inlet 1 and the fuel tank, a fuel filler pipe (not illustrated) is connected, which communicates the fuel filler inlet 1 and the fuel tank with each other. Between the solution filler inlet 2 and the tank 16, a solution filler pipe 15 is connected, which communicates the solution filler inlet 2 and the tank 16 with each other. The fuel filler pipe is arranged from a point directly over the tire to the front side along the inner circumference of the rear wheel house. In contrast, the solution filler pipe 15 is arranged from a point directly over the tire to the rear side along the inner circumference of the rear wheel house. The fuel filler pipe and the solution filler pipe 15 are fixed to each other at the respective portions close to the top end of each pipe.

An example of the horizontal cross-section of the filler inlet 13 is illustrated in FIG. 2. A fuel filler neck 3, corresponding to a portion that receives a fuel refilling nozzle when the fuel is to be supplied (refilled), is provided on the upstream end portion of the fuel filler inlet 1. An additive filler neck 4, corresponding to a portion that receives an additive refilling nozzle when the additive is to be supplied (refilled), is provided on the upstream end portion of the solution filler inlet 2. The filler necks 3 and 4 are each formed into cylindrical form. An end face 3A of the fuel filler neck 3 (i.e., an end face of the fuel filler inlet 1) is arranged so as to project outwards (i.e., towards an outside of the vehicle 10) further than an end face 4A of the additive filler neck 4 (i.e., an end face of the solution filler inlet 2). The inner diameter of the additive filler neck 4 is set to be smaller than that of the fuel filler neck 3. In order to avoid erroneous insertion of the fuel refilling nozzle into the additive filler neck 4, the present embodiment employs an inlet adapter fixed to the inside of the additive filler neck 4 that is formed into a cylindrical shape having an inner diameter smaller than the outer diameter of the fuel refilling nozzle.

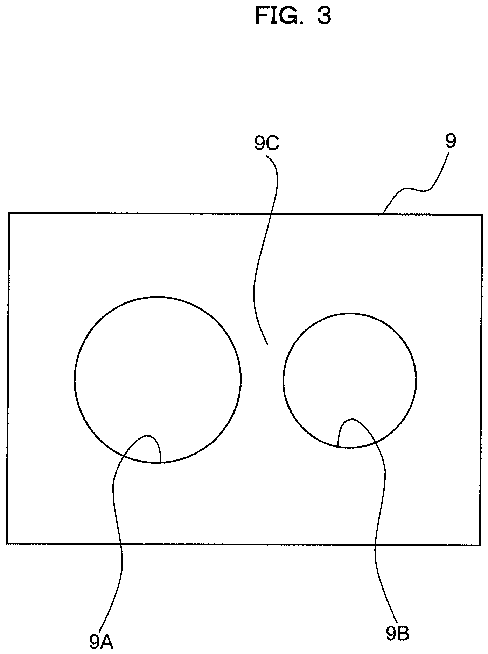

The fuel filler inlet 1 and the solution filler inlet 2 are elastically supported by the fixed member 9 corresponding to the side wall of the casing 90 via filler boots 5, 6 formed of elastic material (e.g., resin, rubber, etc.), and are fixed in such a posture that the inlets penetrate the fixed member 9. As illustrated in FIG. 3, a first hole 9A that receives the fuel filler inlet 1 and a second hole 9B that receives the solution filler inlet 2 are formed on the fixed member 9. The fuel filler neck 3 is placed into the first hole 9A and the fuel filler boot 5 is mounted on the top end side of the fuel filler neck 3. The shape of the fuel filler boot 5 can be understood as a substantially circular truncated cone having an opened base. The fuel filler neck 3 is arranged so as to penetrate the circular truncated cone of the fuel filler boot 5 from the base to the top face.

The fuel filler boot 5 is provided with a first sealer 7 at a portion corresponding to the crossing point of the conical surface and the base of the circular truncated cone. Engaging the first sealer 7 with the back side (inner side of the vehicle 10) of the fixed member 9 allows the fuel filler boot 5 to be fixed to the fixed member 9 and the space between the fuel filler boot 5 and the fixed member 9 to be sealed. This ensures waterproofness between the fuel filler boot 5 and the fixed member 9. Seen from the first sealer 7, the fuel filler boot 5 is shaped so as to project outwards further than the first sealer 7.

The additive filler neck 4 is placed into the second hole 9B and the additive filler boot 6 is mounted on the top end side of the additive filler neck 4. The shape of the additive filler boot 6 can also be understood as a substantially circular truncated cone having an opened base. However, the additive filler boot 6 is mounted to the fixed member 5 in a posture facing opposite to that of the fuel filler boot 5. The fuel filler boot 5 is installed in such a posture that the top face thereof directs towards the outside of the vehicle 10 while the additive filler boot 6 is installed in such a posture that the base thereof directs towards the outside of the vehicle 10.

The additive filler boot 6 is provided with a second sealer 8 at a portion corresponding to the crossing point of the conical surface and the base of the circular truncated cone. Engaging the second sealer 8 with the front side (outer side of the vehicle 10) of the fixed member 9 allows the additive filler boot 6 to be fixed to the fixed member 9 and the space between the additive filler boot 6 and the fixed member 9 to be sealed. This ensures waterproofness (i.e., sealability) between the additive filler boot 6 and the fixed member 9. Seen from the second sealer 8, the additive filler boot 6 is shaped so as to be depressed inwards (i.e., towards an inside of the vehicle 10) further than the second sealer 8. A drain hole may be formed so that water does not stay inside the additive filler boot 6.

On the tip of the fuel filler neck 3, a fuel cap 11 is attached. The fuel cap 11 includes a screw groove being formed on the outer circumference thereof and being screwed with a corresponding screw thread formed on the inner circumference at the tip portion of the cylindrical fuel filler neck 3. In other words, a male thread or an external thread is formed on the fuel cap 11. Accordingly, the fuel cap 11 is attached in a state of being placed inside the fuel filler neck 3. In contrast, on the tip of the additive filler neck 4, an additive cap 12 is mounted. The additive cap 12 includes a screw groove being formed on the inner circumference thereof and being screwed with a corresponding screw thread formed on the outer circumference at the tip portion of the additive filler neck 4. In other words, a female thread or an internal thread is formed on the additive cap 12. Accordingly, the additive cap 12 is attached in a state of covering the tip of the additive filler neck 4 from the outside. For the above, the size of a depressed portion of the additive filler boot 6 is determined, considering the size under a state where the additive cap 12 is mounted on the additive filler neck 4.

### 2. Effects and Advantages

(1) The above structure of a vehicle body arranges the first sealer 7 on one of the front and the back sides of the fixed member 9, and the second sealer 8 on the other one of the front and the back sides of the fixed member 9. Accordingly, as illustrated in a broken-line circle A in Fig.2, at an intermediate portion 9C of the fixed member 9 between the first hole 9A and the second hole 9B, at least a part of the first sealer 7 and a part of the second sealer 8 can be arranged so as to be facing (or directly opposite to) each other via the intermediate portion 9C. In other words, at least a part of the first sealer 7 and a part of the second sealer 8 can be arranged so as to overlap each other while sandwiching (interposing) the intermediate portion 9C therebetween. This makes it easier to arrange the fuel filler neck 3 and the additive filler neck 4 as close to each other as possible, keeping the sealability of the first sealer 7 and the second sealer 8. Accordingly, the fuel filler inlet 1 and the solution filler inlet 2 can be arranged close to each other, so that the installation space of the filler inlet 13 can be made compact in size.
(2) Around the fuel filler inlet 1, the fuel filler boot 5 having a form projecting towards the outside of the vehicle 10 further than the first sealer 7 is mounted. The fuel filler neck 3 is mounted on the fixed member 9 (eventually, to the vehicle body) of the casing 90 via the fuel filler boot 5. Arranging the fuel filler boot 5 of the fuel filler inlet 1 for the fuel which is resupplied frequently, so as to project outwards further than the first sealer 7 can enhance the workability of refilling the fuel. In addition, this extends the distance from the first sealer 7 to the end face 3A of the fuel filler inlet 1. With this configuration, the fuel can be inhibited from splashing to the first sealer 7 during fuel supplying, so that the sealability and protectability of the first sealer 7 can be enhanced. Further, since the fuel filler boot 5 has a form projecting outwards, the bubbled-over fuel is prevented from staying in the fuel filler boot 5, so that the safety of fuel supplying can be enhanced.
(3) The above structure of a vehicle body arranges the first sealer 7 on the back side of the fixed member 9 when seen from the outside of the vehicle 10. With this configuration, when fitting the fuel filler inlet 1, the fuel filler inlet 1 can be easily mounted to the fixed member 9 by pushing the fuel filler boot 5 from the back side of the fixed member 9 (or drawing the fuel filler boot 5 forward from the fixed member 9), so that the assembling workability can be enhanced. If the fuel blows up when being supplied, it is possible to prevent the fuel from entering the first sealer 7, so that the sealability and protectability of the first sealer 7 can be enhanced.
(4) Around the solution filler inlet 2, the additive filler boot 6 having a form depressed towards the inside of the vehicle 10 further than the second sealer 8 is mounted. The additive filler neck 4 is fixed to the fixed member 9 (eventually, to the vehicle body) of the casing 90 via the additive filler boot 6. As the above, depressing the additive filler boot 6 of the solution filler inlet 2 for the additive which is refilled less frequently, towards the inside of the vehicle 10 further than the second sealer 8 widens the workspace for refilling the fuel (creates ample space around the fuel refilling nozzle), so that the workability of fuel refilling, which is performed more frequently, can be enhanced. This extends the distance from the second sealer 8 to the end face 4A of the solution filler inlet 2. With this configuration, the additive can be inhibited from splashing to the second sealer 8 during additive refilling, so that the protectability of the second sealer 8 can be enhanced.
   Since an inlet adapter is generally incorporated inside the solution filler inlet to avoid erroneous insertion of the fuel supply nozzle, the additive cap adopts a female thread type that covers the outside of the solution filler inlet and the male thread is formed on the outer circumference of the solution filler inlet. For the above, the end face of the solution filler inlet is usually formed into a shape projecting towards the outside of the vehicle further than the end face of the fuel filler inlet, and the solution filler inlet may interfere with supplying operation of the fuel. As a solution to the above, providing the additive filler boot 6 depressed inward further than the second sealer 8 makes the present embodiment easier to arrange the end face 4A of the solution filler inlet 2 at a point closer to the inside of the vehicle than the end face 3A of the fuel filler inlet 1, so that the workability of fuel refilling can be enhanced.
(5) The above structure of a vehicle body arranges the second sealer 8 on the front side of the fixed member 9 when seen from the outside of the vehicle 10. With this configuration, when fitting the solution filler inlet 2, the solution filler inlet 2 can be easily mounted to the fixed member 9 by pushing the additive filler boot 6 from the front side of the fixed member 9 (or the operator reaches his/her hand to the back side of the fixed member 9 and pulls the additive filler boot 6 backward), so that the assembling workability can be enhanced.
(6) The above structure of a vehicle body mounts the additive filler boot 6 having a shape depressed towards the inside of the vehicle 10, and mounts the additive cap 12 to the solution filler inlet 2 such that the additive cap 12 is fit inside the depression. As the above, forming the additive filler boot 6 into a depressed shape enables the additive cap 12 to cover the outside of the solution filler inlet 2. Accordingly, the inlet adapter can be formed inside the solution filler inlet 2 and consequently erroneous refilling of the fuel can be further surely avoided. Providing the additive cap 12 to cover the outside of the solution filler inlet 2, which is less frequently used for refilling compared to the fuel filler inlet 1, can prevent the fuel from entering the solution filler inlet 2 even if the fuel splashes during the fuel supply operation.
(7) The above structure of a vehicle body arranges the end face 3A of the fuel filler inlet 1 on the outer side of the vehicle 10 compared to the end face 4A of the solution filler inlet 2. Arranging the fuel filler inlet 1 for the fuel, which is resupplied more frequently, on the front side when seen from the operator enables the fuel supply nozzle to less interfere with the solution filler inlet 2 during the fuel supply operation, so that the workability of fuel refilling can be enhanced.

### 3. Modification

In the above embodiment, description is made in relation to an exemplified configuration that the sealers 7, 8 seal the spaces between the fixed member 9 and the filler boots 5, 6. Alternatively, if the filler boots 5, 6 are integrated with the filler necks 3, 4, respectively, the sealers 7, 8 may have a configuration that seals spaces between the fixed member 9 and the filler necks 3, 4. In other words, the first sealer 7 satisfactorily has a function to seal the space between the fuel filler inlet 1 and the vehicle body and the second sealer 8 satisfactorily has a function to seal the space between the solution filler inlet 2 and the vehicle body. The alternatives bring the same advantages as those of the above embodiment.

In the above embodiment, description is made in relation to an exemplified configuration that the first sealer 7 is arranged on the back side of the fixed member 9 and the second sealer 8 is arranged on the front side of the fixed member 9. Alternatively, an opposite arrangement of the sealers may be suggested. Specifically, the first sealer 7 may be arranged on the front side of the fixed member 9 and the second sealer 8 may be arranged on the back side of the fixed member 9. This alternative can arrange the both sealers 7, 8 so as to be facing each other via the intermediate portion 9C of the fixed member 9, so that a configuration that brings the same advantages as those of the above embodiment can be provided. However, when the fuel filler boot 5 is formed into a shape projecting outwards further than the first sealer 7, as described in the above embodiment, it is preferable that the first sealer 7 is arranged on the back side of the fixed member 9 and the second sealer 8 is arranged on the front side of the fixed member 9 as described in the above embodiment.

The above embodiment assumes the tank 16 for a urea SCR system, but the additive stored in the tank 16 may not be limited to a urea solution. In an exhaust-gas purifying system using NOx selective reduction catalyst, ammonia is sometimes used as a reduction agent in place of urea. In this alternative, the tank 16 can be used as an additive container to store ammonia solution. In an exhaust-gas purifying system using a DPF (diesel particulate filter), hydrocarbon (HC, unburned fuel) is sometimes injected into the exhaust-gas pipe in order to enhance the burning of PM (particulate matter). In this alternative, the tank 16 can be used as an additive container to store the fuel.

The invention thus described, it will be obvious that the same may be varied in many ways in accordance with the scope of the invention as defined in the appended claims.

### REFERENCE SIGNS LIST

- 1:: fuel filler inlet
- 2:: solution filler inlet
- 5:: fuel filler boot
- 6:: additive filler boot
- 7:: first sealer
- 8:: second sealer
- 9:: fixed member
- 9A:: first hole
- 9B:: second hole
- 12:: additive cap

## Claims

1. A structure of a vehicle body comprising:
a fuel filler inlet (1) for supplying a fuel to be provided to an engine mounted on a vehicle (10);
a solution filler inlet (2), being adjacent to the fuel filler inlet (1), for supplying an additive to purify an exhaust gas from the engine;
a fixed member (9) comprising a first hole (9A) that receives the fuel filler inlet (1) and a second hole (9B) that receives the solution filler inlet (2), and being fixed to the vehicle body;
a fuel filler boot (5) having a first sealer (7) that is disposed on one of a front side and a back side of the fixed member (9) and seals a space between the fixed member (9) and the fuel filler inlet (1); and
an additive filler boot (6) having a second sealer (8) that is disposed on another one of the front side and the back side of the fixed member (9) and seals a space between the fixed member (9) and the solution filler inlet (2),
the structure being **characterized in that**:
the fuel filler boot (5) and the additive filler boot (6) are formed separately from each other; and
at least a part of the first sealer (7) and a part of the second sealer (8) are arranged so as to overlap each other while sandwiching a portion of the fixed member (9).

2. The structure according to claim 1, wherein the fuel filler boot (5) is mounted around the fuel filler inlet (1) and has a portion that projects towards an outside of the vehicle (10) further than the first sealer (7).

3. The structure according to claim 1 or 2, wherein the first sealer (7) is disposed on the back side of the fixed member (9) and the second sealer (8) is disposed on the front side of the fixed member (9).

4. The structure according to one of claims 1 to 3, wherein the additive filler boot (6) is mounted around the solution filler inlet (2) and has a portion that is depressed towards an inside of the vehicle (10) further than the second sealer (8).

5. The structure according to one of claims 1 to 4, further comprising an additive cap (12) covering an outer side of the solution filler inlet (2), the additive cap (12) including a screw groove being formed on an inner circumference thereof and the solution filler inlet (2) including a corresponding screw thread formed on an outer circumference thereof.

6. The structure according to one of claims 1 to 5, wherein an end face (3A) of the fuel filler inlet (1) is arranged on an outer side of the vehicle (10) compared to an end face (4A) of the solution filler inlet (2).

## Patentansprüche

1. Fahrzeugkarosseriestruktur, aufweisend:
einen Kraftstoff-Einfüll stutzen (1) zum Zuführen eines Kraftstoffs, der einem in einem Fahrzeug (10) montierten Motor bereitgestellt werden soll;
einen Lösungs-Einfüllstutzen (2), der neben dem Kraftstoff-Einfüllstutzen (1) ist, zum Zuführen eines Zusatzstoffs, um ein Abgas aus dem Motor zu reinigen;
ein befestigtes Element (9), das ein erstes Loch (9A), welches den Kraftstoff-Einfüllstutzen (1) aufnimmt, sowie ein zweites Loch (9B), welches den Lösungs-Einfüllstutzen (2) aufnimmt, aufweist und an der Fahrzeugkarosserie befestigt ist;
eine Kraftstoffeinfüllmanschette (5) mit einer ersten Dichtungseinrichtung (7), die an einer Vorderseite oder einer Rückseite des befestigten Elements (9) angeordnet ist und einen Raum zwischen dem befestigten Element (9) und dem Kraftstoff-Einfüllstutzen (1) abdichtet; und
eine Zusatzstoffeinfüllmanschette (6) mit einer zweiten Dichtungseinrichtung (8), die an einer anderen der Vorderseite und der Rückseite des befestigten Elements (9) angeordnet ist und einen Raum zwischen dem befestigten Element (9) und dem Lösungs-Einfüllstutzen (2) abdichtet;
wobei die Struktur **dadurch gekennzeichnet ist, dass**:
die Kraftstoffeinfüllmanschette (5) und die Zusatzstoffeinfüllmanschette (6) voneinander getrennt ausgebildet sind; und
zumindest ein Teil der ersten Dichtungseinrichtung (7) und ein Teil der zweiten Dichtungseinrichtung (8) derart angeordnet sind, dass sie einander überlappen und dabei einen Abschnitt des befestigten Elements (9) sandwichartig dazwischen aufnehmen.

2. Struktur nach Anspruch 1, wobei die Kraftstoffeinfüllmanschette (5) um den Kraftstoff-Einfüllstutzen (1) herum montiert ist und einen Abschnitt aufweist, der weiter in Richtung eines Äußeren des Fahrzeugs (10) vorsteht als die erste Dichtungseinrichtung (7).

3. Struktur nach Anspruch 1 oder 2, wobei die erste Dichtungseinrichtung (7) an der Rückseite des befestigten Elements (9) angeordnet ist und die zweite Dichtungseinrichtung (8) an der Vorderseite des befestigten Elements (9) angeordnet ist.

4. Struktur nach einem der Ansprüche 1 bis 3, wobei die Zusatzstoffeinfüllmanschette (6) um den Lösungs-Einfüllstutzen (2) herum montiert ist und einen Abschnitt aufweist, der stärker in Richtung eines Inneren des Fahrzeugs (10) vertieft ist als die zweite Dichtungseinrichtung (8).

5. Struktur nach einem der Ansprüche 1 bis 4, ferner aufweisend eine Zusatzstoffabdeckung (12), die eine Außenseite des Lösungs-Einfüllstutzens (2) abdeckt, wobei die Zusatzstoffabdeckung (12) eine Gewindenut aufweist, die an einem Innenumfang der Abdeckung gebildet ist, und der Lösungs-Einfüllstutzen (2) ein entsprechendes Schraubgewinde aufweist, das an einem Außenumfang dieses Einlasses gebildet ist.

6. Struktur nach einem der Ansprüche 1 bis 5, wobei eine Endfläche (3a) des Kraftstoff-Einfüllstutzens (1) verglichen mit einer Endfläche (4a) des Lösungs-Einfüllstutzens (2) an einer Außenseite des Fahrzeugs (10) angeordnet ist.

## Revendications

1. Structure d'un corps de véhicule comprenant :
une entrée de remplissage de carburant (1) pour amener un carburant à être fourni à un moteur monté sur un véhicule (10) ;
une entrée de remplissage de solution (2) qui est adjacente à l'entrée de remplissage de carburant (1), pour fournir un additif afin de purifier un gaz d'échappement du moteur ;
un élément fixe (9) comprenant un premier trou (9A) qui reçoit l'entrée de remplissage de carburant (1) et un second trou (9B) qui reçoit l'entrée de remplissage de solution (2), et étant fixé au corps de véhicule ;
un coffre de remplissage de carburant (5) ayant un premier agent de scellement (7) qui est disposé sur l'un parmi un côté avant et un côté arrière de l'élément fixe (9) et scelle un espace entre l'élément fixe (9) et l'entrée de remplissage de carburant (1) ; et
un coffre de remplissage d'additif (6) ayant un second agent de scellement (8) qui est disposé sur un autre parmi le côté avant et le côté arrière de l'élément fixe (9) et scelle un espace entre l'élément fixe (9) et l'entrée de remplissage de solution (2),
la structure étant **caractérisée en ce que** :
le coffre de remplissage de carburant (5) et le coffre de remplissage d'additif (6) sont formés séparément l'un de l'autre ; et
au moins une partie du premier agent de scellement (7) et une partie du second agent de scellement (8) sont agencées pour se chevaucher tout en prenant en sandwich une partie de l'élément fixe (9).

2. Structure selon la revendication 1, dans laquelle le coffret de remplissage de carburant (5) est monté autour de l'entrée de remplissage de carburant (1) et a une partie qui fait saillie vers un extérieur du véhicule (10) davantage que le premier agent de scellement (7).

3. Structure selon la revendication 1 ou 2, dans laquelle le premier agent de scellement (7) est disposé sur le côté arrière de l'élément fixe (9) et le second agent de scellement (8) est disposé sur le côté avant de l'élément fixe (9).

4. Structure selon l'une des revendications 1 à 3, dans laquelle le coffre de remplissage d'additif (6) est monté autour de l'entrée de remplissage de solution (2) et a une partie qui est enfoncée vers un intérieur du véhicule (10) davantage que le second agent de scellement (8).

5. Structure selon l'une des revendications 1 à 4, comprenant en outre un capuchon d'additif (12) recouvrant un côté externe de l'entrée de remplissage de solution (2), le capuchon d'additif (12) comprenant une rainure de vis qui est formée sur sa circonférence interne et l'entrée de remplissage de solution (2) comprenant un filetage de vis correspondant formé sur sa circonférence externe.

6. Structure selon l'une des revendications 1 à 5, dans laquelle une face d'extrémité (3A) de l'entrée de remplissage de carburant (1) est agencée sur un côté externe du véhicule (10) par rapport à une face d'extrémité (4A) de l'entrée de remplissage de solution (2).
